# EUROPEAN PATENT SPECIFICATION

(11) **EP 1 783 039 B1**
(45) Date of publication and mention of the grant of the patent: **22.10.2008**
(21) Application number: 06019689.6
(22) Date of filing: 20.09.2006
(51) Int. Cl.: B62J 1/12

(54) **Motorcycle having a seat structure**
Motorrad mit einer Sitzstruktur
Motocycle avec une structure de siège

(30) Priority: 31.10.2005 JP 2005317270
(43) Date of publication of application: 09.05.2007
(73) Proprietor: HONDA MOTOR CO., LTD., Tokyo 107-8556 (JP)
(72) Inventor: Misaki, Kenichi, Wako-shi Saitama 351-0193 (JP); Takahashi, Atsuhiko, Wako-shi Saitama 351-0193 (JP); Nakano, Toshinori, Wako-shi Saitama 351-0193 (JP)
(74) Representative: Rupp, Christian

(56) References cited:
- EP-A2- 1 437 293
- DE-A1- 19 536 041
- JP-A- 5 032 187
- JP-A- 2005 125 859
- US-A- 4 563 038

## Description

The present invention relates to a motorcycle having a seat structure capable of adjusting a height of a rider's seat.

In the past, in the seat structure, a rear portion of a rider's seat is supported by a step-like portion provided on a seat bottom plate or seat frame, and a front portion of the rider's seat is supported by an adjusting mechanism capable of adjusting a support height (see JP-A No. H9-11947 and JP-A No. 2003-81152, for instance). The height of the rider's seat is adjusted by changing the support height of the seat front portion through the adjusting mechanism and by changing a supporting position in the step-like portion to change the support height of the seat rear portion.

The above seat structure requires the adjusting mechanism for supporting the front portion of the rider's seat, and thereby the number of parts, the weight, and costs tend to increase. With the adjusting mechanism provided on the body side, a limitation may be imposed on a body design in some cases. Further, it is also necessary to separately consider how to fill a clearance between the rider's seat and the pillion provided behind the rider's seat upon adjusting the height of the rider's seat.

Further, the EP 1 437 293 A2 discloses a motorcycle seat structure composed of a rider's seat and a pillion. The height of the rider's seat can be adjusted via the pivotal arms 36 which are connected to the front columns 30 and via the rear pivotal arms 37 which are respectively connected to the rear columns 31. The mechanism of adjusting the height of the rider's seat is constructed between the bottom plate of said seat and the lid member 24. The lid member 24 is mounted via a hinge 25 to the vehicle body frame. EP 1437293 A2 discloses a motorcycle according to the preamble of claim 1.

The JP 2005 125859 A and the JP 5 032 187 A show examples of motorcycle seats which provide steplessly adjustable height.

The present invention has bee accomplished in view of the above circumstances, with an aim to provide a motorcycle having a seat structure capable of adjusting a height of a rider's seat with a simple structure and facilitating an operation of filling a clearance between the rider's seat and a rear pillion.

As means for solving the problem, the invention as claimed in claim 1 provides a motorcycle (for example, a motorcycle 1 of an embodiment of the invention) having a seat structure capable of adjusting a height of a rider's seat (for example, a main seat 31 of the embodiment), where in a bottom plate (for example, a rear bottom plate 41 of the embodiment) of a rear pillion (for example, a pillion 32 of the embodiment) extends towards the front of the body of the motorcycle, and a mechanism of adjusting the height of the rider's seat (for example, a height adjusting mechanism 50 of the embodiment) is made up of a lower extended portion (for example, a seat lower extended portion 45 of the embodiment) of the bottom plate of the rear pillion and a front bottom plate of the rider's seat, wherein the lower extended portion of the bottom plate of the rear pillion and the front bottom plate of the rider's seat having step-like portions which engage each other.

The invention as claimed in Claim 2 is characterized in that the step-like portion ascends toward the rear of the body of the motorcycle, and a mating surface (for example, a rear surface 33 and a front surface 34 of the embodiment) between the rider's seat and the rear pillion slopes up toward the rear of the body of the motorcycle.

According to the invention as claimed in Claim 1, the mechanism of adjusting the height of the rider's seat is provided in the extended portion of the bottom plate of the rear pillion, making it unnecessary to provide an adjusting mechanism or the like on the body side to thereby simplify the structure around the seat. Hence, the number of parts, the weight, and costs can be reduced, and limitations on processing of a body frame or design can be eased to improve the degree of freedom in design.

Further, the bottom plates of the rider's seat and the pillion constitute the mechanism of adjusting the height of the rider's seat, whereby the number of parts, the weight, and costs can be more reduced than the case of separately providing a height adjusting mechanism. In particular, if the bottom plate is formed of a resin, the step-like portion of the height adjusting mechanism can be easily formed, and the degree of freedom in shape can be increased.

According to the invention as claimed in Claim 2, even when the height of the rider's seat is adjusted, the rider's seat which is moved along the step-like portion ascending toward the rear of the body, moves along the mating surface that slopes up toward the rear of the body, whereby a clearance can be removed between the rider's seat and the pillion.
Fig. 1 is a side view of a motorcycle according to an embodiment of the present invention.
Fig. 2 is a side view of a main seat, a pillion, and their surroundings of the motorcycle.
Fig. 3 is a sectional view taken along the center of the width of a bottom plate of the main seat.
Fig. 4 shows a lower side of the bottom plate of Fig. 3.
Fig. 5 is a sectional view taken along the center of the width of a bottom plate of the pillion.
Fig. 6 shows a lower side of the bottom plate of Fig. 5.
Fig. 7 is a side view of an example where the height of the main seat of Fig. 2 is changed.
Fig. 8 is a side view of an example where the height of the main seat of Figs. 2 and 7 is changed.

Hereinafter, an embodiment of the present invention will be described with reference to the accompanying drawings. Incidentally, in the following description, a back-and-forth direction and a horizontal direction are the same as those of a vehicle unless otherwise specified. In the accompanying drawings, the arrow FR indicates a front portion of the vehicle, the arrow LH indicates a left-handed portion of the vehicle, and the arrow UP indicates an upper portion of the vehicle.

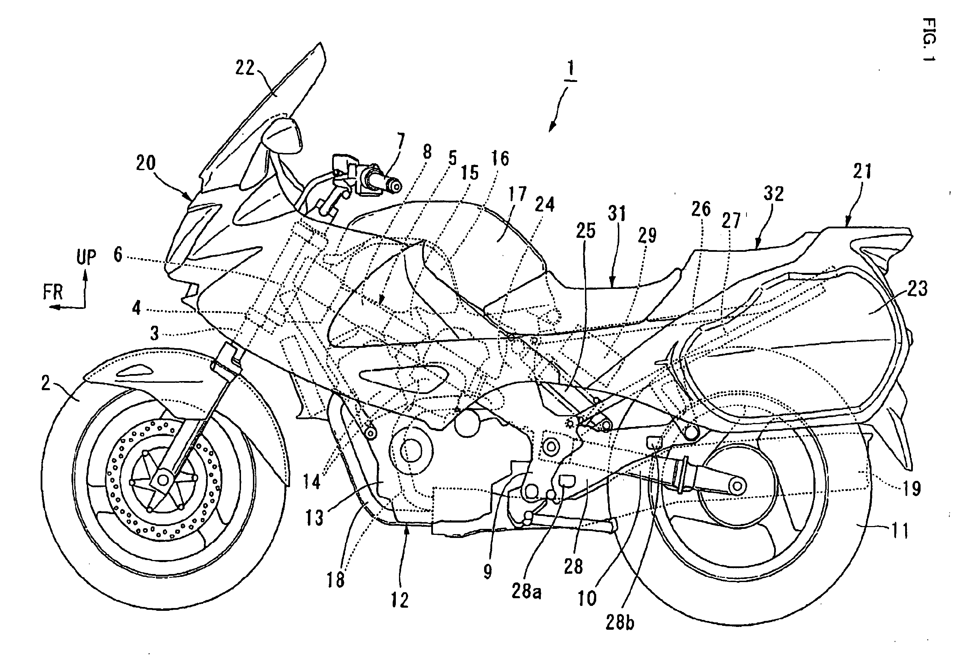

As shown in Fig. 1, a front wheel 2 of a motorcycle 1 is journalled on lower ends of right and left front forks 3. Upper portions of each front fork 3 are pivotally supported by a head pipe 6 of a body frame 5 through a steering system 4 in a steerable manner. A handlebar 7 is attached on the steering system 4.
Right and left main tubes 8 extend diagonally and downwardly to the rear side from the head pipe 6 and communicate with right and left pivot plates 9 at rear ends. Front ends of swing arms 10 are pivotally supported to the pivot plates 9 in a vertically swingable manner. A rear wheel 11 of the motorcycle 1 is journalled on rear ends of the swing arms 10.

An engine 12 being a motor of the motorcycle 1 is suspended in a body frame 5. The engine 12 is a V-type two-cylinder engine having a crank shaft extending along a body width direction (horizontal direction). Front and back cylinders 14 are erected on a crank case 13, and suction ports of the two cylinders 14 are connected with a throttle body 15 provided between banks thereof. An air cleaner box 16 is provided upstream of the throttle body 15 and connected therewith. The air cleaner box 16 is provided inside the front half of a fuel tank 17.

Exhaust pipes 18 extend from exhaust ports of the two cylinders 14, and are led below the engine 12 and appropriately gathered, and then connected with a silencer 19 provided on the right-handed rear side of the body.
The left arm of the swing arms 10 is hollow, and a not-shown drive shaft extending from the engine 12 is inserted into the hollow portion. An engine power is transmitted from the engine 12 to the rear wheel 11 through the drive shaft.
The body front portion of the motorcycle 1 is covered with a front cowl 20, and the body rear portion is covered with a rear cowl 21. A power screen 22 is supported on an upper front side of the front cowl 20, and right and left pannier cases 23 are built in both rear portions of the rear cowl 21.

Right and left cushion supporting portions 24 are erected on an upper rear side of each main tube 8. A rear cushion unit 25 is provided between each of the cushion supporting portions 24 and the swing arms 10. Right and left seat rails 26 extend backward from rear portions of each cushion supporting portion 24. Rear ends of the seat rails 26 are supported to rear ends of right and left support rails 27 extending upward to the rear side from the rear portion of each pivot plate 9. A main seat 31 (front seat) for a rider behind the fuel tank 17 and a pillion 32 (rear seat) for a pillion passenger behind the main seat are supported on each seat rail 26. A step holder 28 extending backward from the rear portion of each pivot plate 9 supports front steps 28a for a rider and rear steps 28b for a pillion passenger. A battery 29 and not-shown electrical components are arranged below the main seat 31.

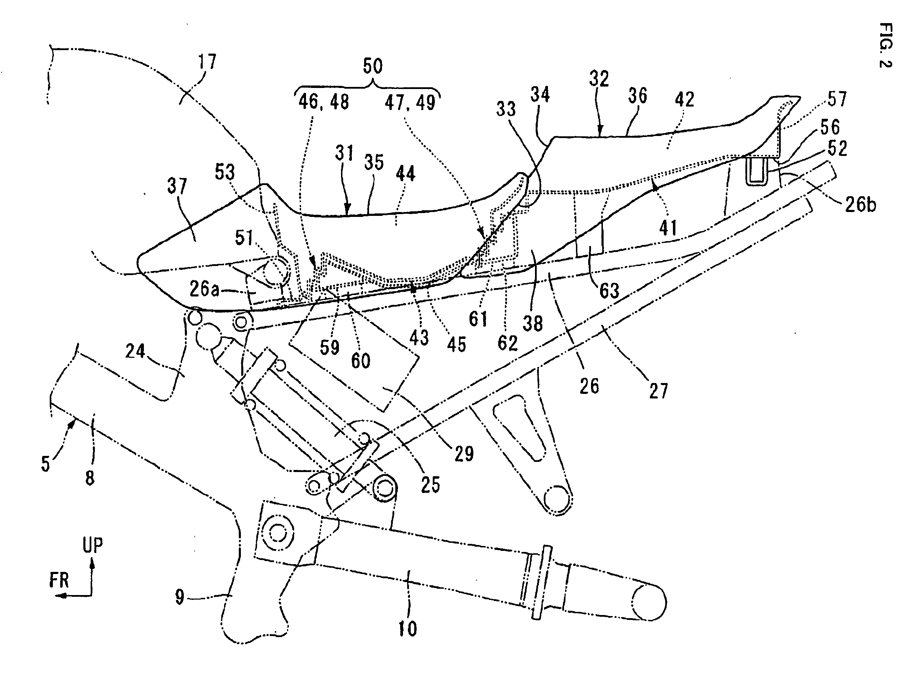

Referring also to Fig. 2, the main seat 31 and the pillion 32 are separately provided such that a rear surface 33 of the main seat 31 and a front surface 34 of the pillion 32, both of which slope up toward the rear portion, are brought into close contact with each other. That is, the rear surface 33 and the front surface 34 are the mating face between the main seat 31 and the pillion 32. The main seat 31 forms a substantially flat upper surface as a front seat 35 for a rider. The pillion 32 similarly forms a substantially flat upper surface as a rear seat 36 for a pillion passenger, which is positioned obliquely upward behind the front seat 35. Right and left edges of the front and rear seats 35, 36 are curved downwardly.
The main seat 31 has right and left seat front extended portions 37 at front ends, which extend forward to sandwich the lower back portion of the fuel tank 17. The pillion 32 has right and left seat intermediate extended portions 38 at front ends, which extend obliquely downward to the front portion along both sides of the rear surface 33 of the main seat 31.

In this example, the main seat 31 is height-adjustably attached to the pillion 32 so as to adjust the seat height.
To be specific, a rear bottom plate 41 of the pillion 32 extends toward the front portion of the body to thereby integrally form a seat lower extended portion 45 that gets under the front bottom plate 43 of the main seat 31 to support the main seat 43. In addition, lower step-like portions 46 and 47 ascending backward are integrally formed before and behind the seat lower extended portion 45. On the other hand, upper step-like portions 48 and 49 that engage with the front and rear lower step-like portions 46, 47 are integrally formed before and behind the front bottom plate 43 of the main seat 31 to ascend backward. The engagement positions between the front upper and lower step-like portions 46 and 48 and the rear upper and lower step-like portions 47 and 49 are shifted stepwise, so that the seat height of the main seat 31 can be adjusted. That is, the step-like portions 46 to 49 serve as a height adjusting mechanism 50 of the main seat 31.

An engagement claw 51 that engages with a front crossing member 26a extending between front ends of the right and left seat rails 26 is projected at the front end of the seat lower extended portion 45, for example. Incidentally, the front crossing member 26a rotatably supports a lower side of the rear end of the fuel tank 17, for example. On the other hand, a striker 52 is erected on the lower side of the rear end of the rear bottom plate 41. The striker 52 is engaged with a not-shown lock mechanism attached to a rear crossing member 26b extending between rear ends of the right and left seat rails 26. The pillion 32 and the main seat 31 attached thereto are mounted to the body by means of the striker 52 and the engagement claw 51. At this time, the mounting position of the pillion 32 relative to the body and the seat height of the pillion 32 are constant regardless of the mounting position of the main seat 31.

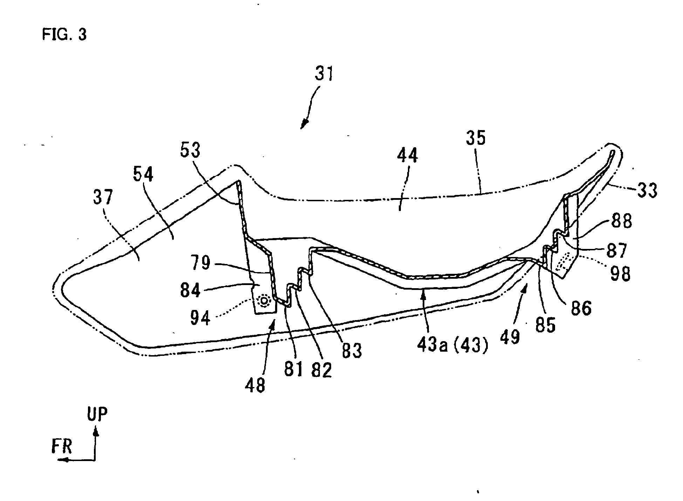

As shown in Fig. 3, the main seat 31 is prepared by forming a seat cushion 44 made of, for example, urethane sponge on a bottom plate main body 43a of the front bottom plate 43 made of a synthetic resin such as polypropylene. The seat cushion 44 surface is covered with, for example, a polyvinyl chloride film. The bottom plate main body 43a is provided inside the front seat 35 of the main seat 31 with a gap corresponding to a thickness of the seat cushion 44. Front and rear intermediate portions of the bottom plate main body 43a are gently projected downward as viewed from the side so as to ensure the thickness of the seat cushion 44. Along with this curve, the rear portion of the bottom plate main body 43a slopes up toward the rear portion along with the rear surface 33 up to the rear edge of the main seat 31, and the front portion of the bottom plate main body 43a slopes up towards the front portion up to the front edge of the main seat 31 by way of a front wall 53.

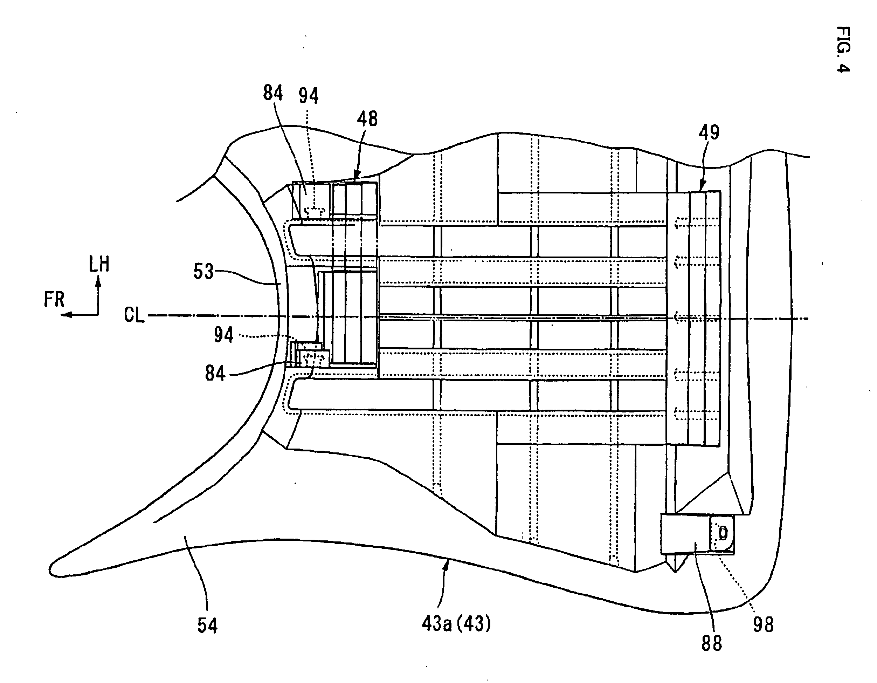

Referring also to Fig. 4, a core portion 54 of the right and left seat front extended portions 37 extends forward from both front ends of the bottom plate main body 43a. The width of the front portion of the bottom plate main body 43a is narrow to secure foothold of a seated rider. The front bottom plate 43 forms the rear surface 33 and an inner surface of the main seat 31 such as a lower surface. Reinforcement ribs or the like are formed in a lattice form on the inner surface as appropriate, for example. Incidentally, the straight line CL of Fig. 4 indicates the center of the width of the body.

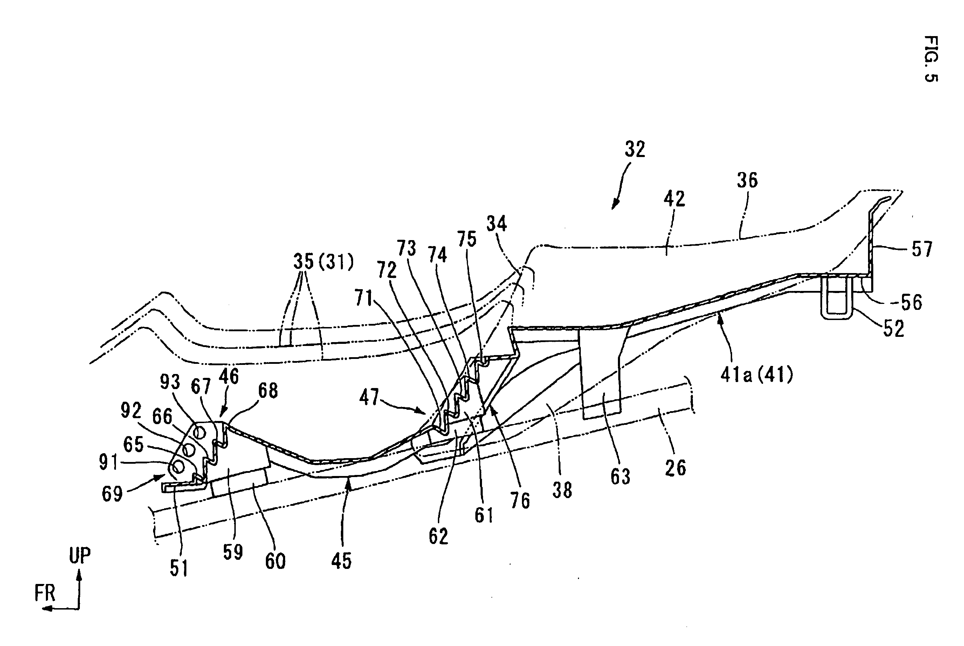

As shown in Fig. 5, the pillion 32 is prepared by forming a seat cushion 42 made of, for example, urethane sponge on a bottom plate main body 41a of the rear bottom plate 41 made of a synthetic resin such as polypropylene. The seat cushion 42 surface is covered with, for example, a polyvinyl chloride film. The bottom plate main body 41a is provided inside the rear seat 36 of the pillion 32 with a gap corresponding to a thickness of the seat cushion 42. The rear portion of the bottom plate main body 41a slopes up to the rear edge of the pillion 32, by way of a rear wall 57 after a rear base 56 to which the striker 52 is inserted is formed. The front edge of the bottom plate main body 41a slopes up to a lower end of the front edge of the pillion 32. The seat lower extended portion 45 extends from the front edge along the lower surface of the main seat 31.

More specifically, the seat lower extended portion 45 extends from the front edge of the bottom plate main body 41a to define the rear lower step-like portion 47 and then extends diagonally downwards to the front portion along the front surface 34. Then, the extended portion extends forward along the lower surface of the bottom plate main body 43a of the main seat 31 with a predetermined clearance from the lower surface. The extended portion extends diagonally upward to the front portion and then extends diagonally downward to the front portion to define the front lower step-like portion 46. The battery 29 is provided aslant along the front lower step-like portion 46 and its subsequent slope, below the seat lower extended portion 45 as viewed from the side (see Fig. 2).

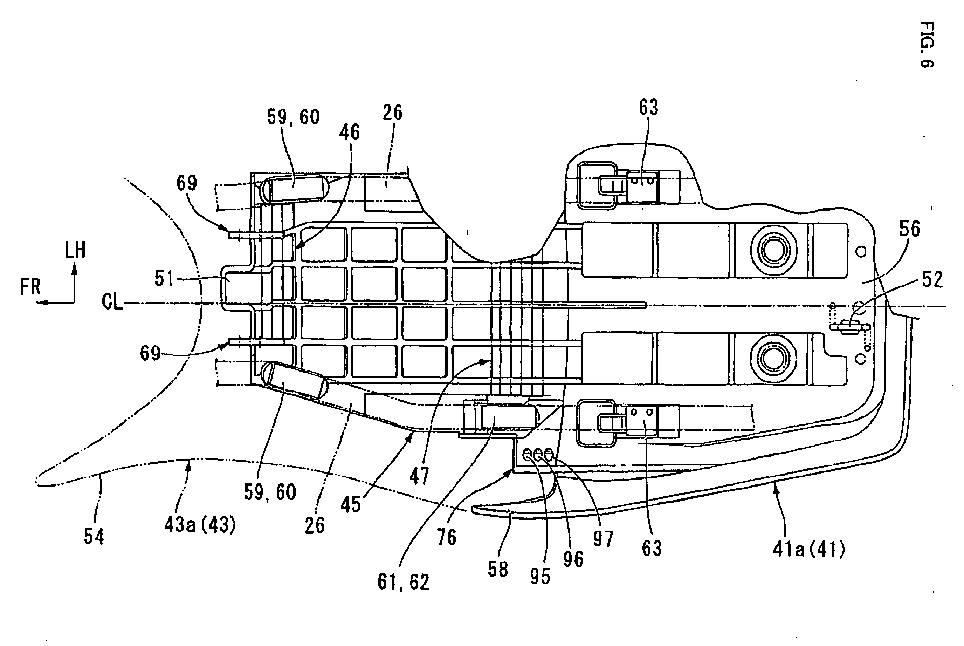

Referring also to Fig. 6, the width of the seat lower extended portion 45 is narrower than the bottom plate main body 41a and the bottom plate main body 43a of the main seat 31. The engagement claw 51 is integrally formed in a position closer to the left side of the center of the front edge thereof. The core portion 58 of the right and left seat intermediate extended portions 38 extends diagonally downwards to the front portion from both sides of the front portion of the bottom plate main body 41a. The rear bottom plate 41 forms the inner surface such as the lower surface of the pillion 32. Reinforcement ribs or the like are formed in a lattice form on the inner surface and the lower surface of the seat lower extended portion 45 as appropriate, for example. Incidentally, the straight line CL of Fig. 6 indicates the center of the width of the body.

A front base 59 is integrally formed to protrude downward, on both sides of the front portion of the seat lower extended portion 45. A cushion rubber 60 attached to the front base 59 is brought into contact with the front portion of the right and left seat rails 26. A middle base 61 is integrally formed to protrude downward, at both sides of the rear portion of the seat lower extended portion 45. A cushion rubber 62 attached to the middle base 61 is brought into contact with a middle portion in the longitudinal direction of the right and left seat rails 26. The main seat 31 is supported by the right and left seat rails 26 through the seat lower extended portion 45.

Each of front supporting legs 63 is integrally formed to extend downward, on both sides of the front portion of the bottom plate main body 41a. A lower end of each supporting leg 63 is brought into contact with a portion closer to the rear side of the middle portion in the longitudinal direction of the right and left seat rails 26. The rear base 56 is integrally formed to protrude downward in substantially the center position of the rear portion of the bottom plate main body 41a. The rear base 56 is brought into contact with the rear crossing member 26b that extend between the rear ends of the right and left seat rails 26. The pillion 32 is supported by the right and left seat rails 26 through the above bottom plate main body 41a.

The front lower step-like portion 46 of the seat lower extended portion 45 extends along the horizontal direction in the right and left central portions on the front side of the seat lower extended portion 45. For example, the front lower step-like portion 46 is formed closer to the left side of the body.
The front lower step-like portion 46 includes a first front lower inclined wall 65 that slopes downward and constitutes a front edge of the step-like portion, a second front lower inclined wall 66 sloping downward which is formed obliquely upward to follow the wall 65 by way of a substantially vertical wall that is erected from the rear end, a third front lower inclined wall 67 sloping downward, which is formed obliquely upward to follow the wall 66 by way of a substantially vertical wall that is erected from the rear end, and a fourth front lower inclined wall 68 sloping downward, which is formed obliquely upward to follow the wall 67 by way of a substantially vertical wall that is erected from the rear end. The inclined walls are arranged in parallel. Incidentally, right and left fastening walls 69 as described later are formed on the front side of the left intermediate portion and the front side of the right end of the front lower step-like portion 46. The right and left front bases 59 are provided on both sides of the front lower step-like portion 46.

The rear lower step-like portion 47 extends along the horizontal direction in the right and left central portions on the rear side of the seat lower extended portion 45.
The portion 47 is wider than the front lower step-like portion 46, evenly as viewed from the widthwise direction.
The rear lower step-like portion 47 includes a first rear lower inclined wall 71 that slopes downward and constitutes a front edge of the step-like portion, a second rear lower inclined wall 72 sloping downward which is formed obliquely upward to follow the wall 71 by way of a substantially vertical wall that is erected from the rear end, a third rear lower inclined wall 73 sloping downward, which is formed obliquely upward to follow the wall 72 by way of a substantially vertical wall that is erected from the rear end, a fourth rear lower inclined wall 74 sloping downward, which is formed obliquely upward to follow the wall 73 by way of a substantially vertical wall that is erected from the rear end, and a fifth rear lower inclined wall 75 sloping downward, which is formed obliquely upward to follow the wall 74 by way of a substantially vertical wall that is erected from the rear end. The inclined walls are arranged in parallel. Incidentally, the right and left middle bases 61 are formed on both sides of the rear lower step-like portion 47. Right and left fastening walls 76 as described later are formed on right and left outer sides of the right and left middle bases 61.

As shown in Figs. 3 and 4, the front upper step-like portion 48 of the main seat 31 extends along the horizontal direction in the right and left intermediate portions on the front side of the bottom plate main body 43a. The front upper step-like portion 48 is provided closer to the left side in accordance with the front lower step-like portion 46.
The front upper step-like portion 48 protrudes downward from the front portion of the bottom plate main body 43a. The front edge thereof is formed below the bottom plate main body 43a through a vertical wall 79 that droops from a peripheral portion of the front wall 53 with some distance. The front upper step-like portion 48 includes a first front upper inclined wall 81 that slopes downward and constitutes a front edge of the step-like portion, a second front upper inclined wall 82 sloping downward which is formed obliquely upward to follow the wall 81 by way of a substantially vertical wall that is erected from the rear end, and a third front upper inclined wall 83 sloping downward, which is formed obliquely upward to follow the wall 82 by way of a substantially vertical wall that is erected from the rear end. The substantially vertical wall that is erected from the rear end of the third front upper inclined wall 83 is continuous to a portion of the bottom plate main body 43a.

The left intermediate portion of the upper front step-like portion 48 is removed to secure a space for the front fastening wall 69 on the left side of the seat lower extended portion 45 to be substantially flush with a portion of the bottom plate main body 43a. In other words, the front upper step-like portion 48 is divided into the right and left intermediate portions and the left portion. Incidentally, right and left fastening legs 84 as described below are provided on the front side of the right and left ends of the front upper step-like portion 48.

The rear upper step-like portion 49 extends along the horizontal direction in the right and left central portions on the rear side of the bottom plate main body 43a. The rear upper step-like portion 49 is wider than the front upper step-like portion 48, evenly as viewed from the horizontal direction, in accordance with the rear lower step-like portion 47.
The rear upper step-like portion 49 protrudes downward from the rear portion of the bottom plate main body 43a, and includes a first rear upper inclined wall 85 that slopes downward and constitutes a front edge of the step-like portion, a second rear upper inclined wall 86 sloping downward which is formed obliquely upward to follow the wall 85 by way of a substantially vertical wall that is erected from the rear end, and a third rear upper inclined wall 87 sloping downward, which is formed obliquely upward to follow the wall 86 by way of a substantially vertical wall that is erected from the rear end. The substantially vertical wall that is erected from the rear end of the third rear upper inclined wall 87 is continuous to a portion of the bottom plate main body 43a. Incidentally, right and left rear fastening legs 88 as described below are provided with some distance on both sides of the rear upper step-like portion 49.

The front lower step-like portion 46 and the front upper step-like portion 48 can be engaged such that the first front upper inclined wall 81 and the first front lower inclined wall 65 are brought into contact with each other, and subsequent vertical walls are brought into contact with each other, such that the second front upper inclined wall 82 and the second front lower inclined wall 66 are brought into contact with each other, and subsequent vertical walls are brought into contact with each other, and such that the third front upper inclined wall 83 and the third front lower inclined wall 67 are brought into contact with each other, and subsequent vertical walls are brought into contact with each other (see Fig 2).

At this time, the rear lower step-like portion 47 and the rear upper step-like portion 49 are engaged with each other such that the first rear upper inclined wall 85 and the first rear lower inclined wall 71 are brought into contact with each other, and subsequent vertical walls are brought into contact with each other, such that the second rear upper inclined wall 86 and the second rear lower inclined wall 72 are brought into contact with each other, and subsequent vertical walls are brought into contact with each other, and such that the third rear upper inclined wall 87 and the third rear lower inclined wall 73 are brought into contact with each other, and subsequent vertical walls are brought into contact with each other (see Fig 2).

As described above, the front upper and lower step-like portions 46 and 48 are engaged with each other, and the rear upper and lower step-like portions 47 and 49 are engaged with each other to perform positioning of the pillion 32 relative to the main seat 31 in the back-and-forth direction and the vertical direction. A position at which the pillion 32 is mounted to the body is fixed, so if a position of the pillion 32 relative to the main seat 31 is determined, a position of the main seat 31 relative to the body can be determined.
In this way, the front upper and lower step-like portions 46 and 48 are engaged with each other, and the rear upper and lower step-like portions 47 and 49 are engaged with each other, so that a load mainly including the weight of a rider applied to the main seat 31 is borne by the right and left seat rails 26 through the seat lower extended portion 45.

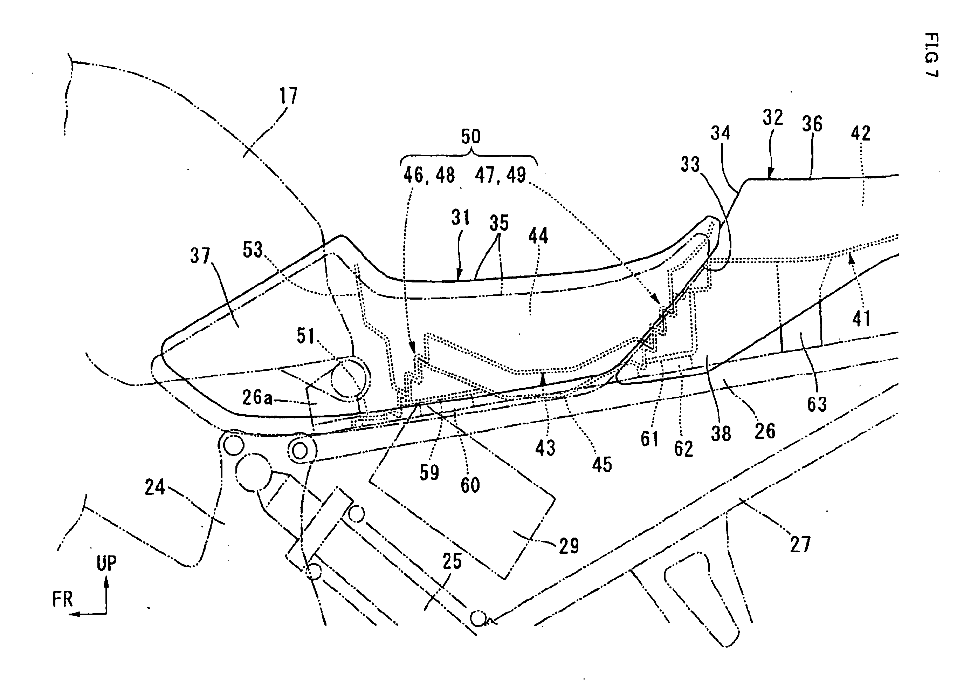

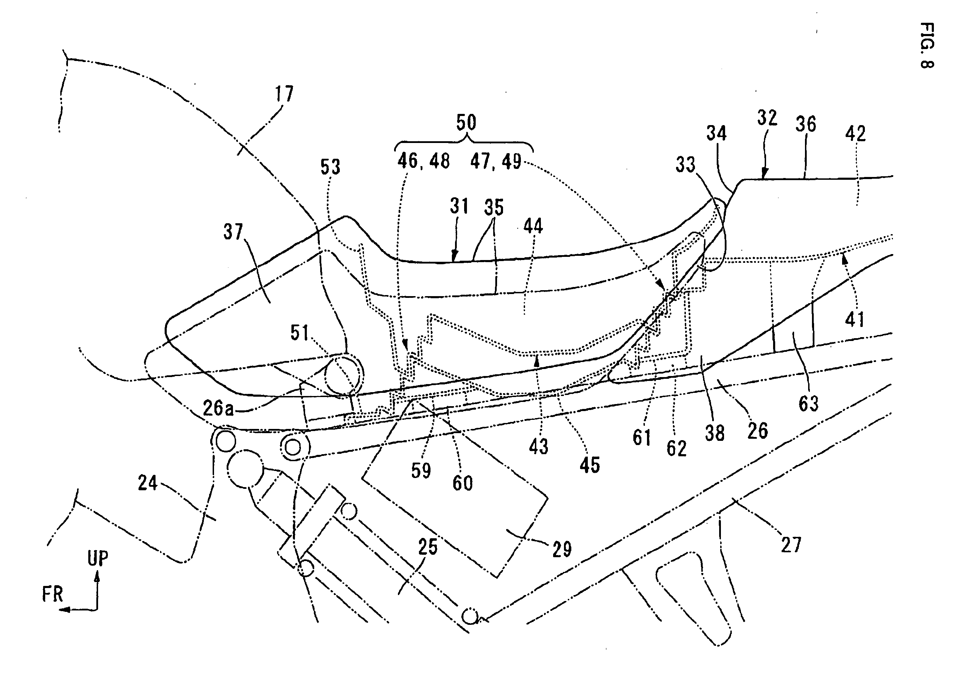

The front upper and lower step-like portions 46 and 48 and the rear upper and lower step-like portions 47 and 49 can be engaged at three levels, that is, the lower engagement position, an intermediate engagement position (see Fig. 7), and an upper engagement position (see Fig. 8) along the inclined surface that slopes up toward the rear portion and is substantially parallel to the rear surface 33 of the main seat 31 and the front surface 34 of the pillion 32.

The front upper and lower step-like portions 46 and 48 and the rear upper and lower step-like portions 47 and 49 are set such that the amount and direction of displacement between the lower and intermediate engagement positions and the amount and direction of displacement between the intermediate and upper engagement positions are substantially equal before and behind the main seat 31. That is, the engagement position between the front upper and lower step-like portions 46 and 48 and the engagement position between the rear upper and lower step-like portions 47 and 49 are changed at the same time, by which the main seat 31 can be moved substantially in parallel to the pillion 32 along the inclined surface. The mounting position of the main seat 31 relative to the body can be changed to thereby change the seat height of the main seat 31 at three levels by changing the mounting position of the main seat 31 in this way.

Incidentally, in the intermediate engagement position, the first front upper inclined wall 81 and the second front lower inclined wall 66 are brought into contact with each other, and subsequent vertical walls are brought into contact with each other; the second front upper inclined wall 82 and the third front lower inclined wall 67 are brought into contact with each other, and subsequent vertical walls are brought into contact with each other; the third front upper inclined wall 83 and the fourth front lower inclined wall 68 are brought into contact with each other, and subsequent vertical walls are brought into contact with each other; the first rear upper inclined wall 85 and the second rear lower inclined wall 72 are brought into contact with each other, and subsequent vertical walls are brought into contact with each other; the first rear upper inclined wall 85 and the second rear lower inclined wall 72 are brought into contact with each other, and subsequent vertical walls are brought into contact with each other; the second rear upper inclined wall 86 and the third rear lower inclined wall 73 are brought into contact with each other, and subsequent vertical walls are brought into contact with each other; the first rear upper inclined wall 85 and the second rear lower inclined wall 72 are brought into contact with each other, and subsequent vertical walls are brought into contact with each other; and the third rear upper inclined wall 87 and the fourth rear lower inclined wall 74 are brought into contact with each other, and subsequent vertical walls are brought into contact with each other (see Fig. 7).

Further, in the upper engagement position, the first front upper inclined wall 81 and the third front lower inclined wall 67 are brought into contact with each other, and subsequent vertical walls are brought into contact with each other; the second front upper inclined wall 82 and the fourth front lower inclined wall 68 are brought into contact with each other, and subsequent vertical walls are brought into contact with each other; the first rear upper inclined wall 85 and the third rear lower inclined wall 73 are brought into contact with each other, and subsequent vertical walls are brought into contact with each other; the second rear upper inclined wall 86 and the fourth rear lower inclined wall 74 are brought into contact with each other, and subsequent vertical walls are brought into contact with each other; and the third rear upper inclined wall 87 and the fifth rear lower inclined wall 75 are brought into contact with each other, and subsequent vertical walls are brought into contact with each other (see Fig. 8).

As shown in Figs. 5 and 6, the right and left front fastening walls 69 are integrally formed on the front side of the left intermediate portion and the front side of the right end of the front lower step-like portion 46. The right and left fastening walls 69 have a plate shape orthogonal to the body width direction and extend diagonally forward and upward from the front lower step-like portion 46. Three through-holes are formed at tip ends of the right and left front fastening walls 69 to pass therethrough in the horizontal direction. The through-holes are arranged backward and upward along the movement direction of the main seat 31. In the following description, the lower through-hole, the intermediate through-hole, and the upper through-hole are referred to as a first front fastening hole 91, a second front fastening hole 92, and a third front fastening hole 93.

On the other hand, as shown in Figs. 3 and 4, the right and left front fastening legs 84 are integrally formed on front sides of the right and left ends of the front upper step-like portion 48. The right and left front fastening legs 84 have a square column shape that extends downward from a peripheral portion of the front wall 53. The tips thereof are positioned somewhat below the first front upper inclined wall 81. The right and left front fastening legs 84 are formed on the left side of the right and left front fastening walls 69. The right side thereof is brought into contact with the left side of the right and left front fastening walls 69. A nut 94 is inserted to the right side of the tip end of the right and left front fastening legs 84. A not-shown fastening bolt can be screwed to the nut 94 from the right side.

The right and left nuts 94 are positioned on the left side of the right and left first front fastening holes 91 if the front upper and lower step-like portions 46 and 48 and the rear upper and lower step-like portions 47 and 49 are engaged in the lower engagement position. The right and left nuts 94 are positioned on the left side of the right and left second front fastening holes 91 if the front upper and lower step-like portions 46 and 48 and the rear upper and lower step-like portions 47 and 49 are engaged in the intermediate engagement position.
The right and left nuts 94 are positioned on the left side of the right and left third front fastening holes 93 if the front upper and lower step-like portions 46 and 48 and the rear upper and lower step-like portions 47 and 49 are engaged in the upper engagement position. The fastening bolts inserted to any adjacent fastening holes are screwed into the right and left nuts 94, by which the front portion of the main seat 31 is fixed to the front portion of the seat lower extended portion 45 in such a state that the front upper and lower step-like portions 46 and 48 and the engagement position between the rear upper and lower step-like portions 47 and 49 are engaged in any of the engagement positions. On the other hand, the fastening bolts are screwed/unscrewed to thereby adjust the fixing position of the front portion of the main seat 31 relative to the pillion 32 at three levels.

As shown in Figs. 5 and 6, the right and left rear fastening walls 76 are integrally formed on both sides of the rear lower step-like portion 47. The right and left rear fastening walls 76 have a plate shape along the body width direction, and are provided diagonally downward behind the rear lower step-like portion 47 as viewed from the side. The right and left rear fastening walls 76 are provided obliquely upward and downward along the moving direction of the main seat 31. Three through-holes are formed in the right and left central portions to pass through the wall in the perpendicular direction. The through-holes are arranged in line along the moving direction of the main seat 31. In the following description, the lower through-hole, the intermediate through-hole, and the upper through-hole are referred to as a first rear fastening hole 95, a second rear fastening hole 96, and a third rear fastening hole 97.

On the other hand, as shown in Figs. 3 and 4, the right and left rear fastening legs 88 are integrally formed on front sides of the rear upper step-like portion 49. The right and left rear fastening legs 88 have a box shape that extends obliquely downward from both sides of the rear upper step-like portion 49. The leading edge that slopes up toward the rear portion is positioned obliquely downward behind the rear lower step-like portion 47 as viewed from the side. The leading edge is brought into contact with an upper surface of the right and left rear fastening walls 76. Nuts 98 are inserted to the tips of the right and left rear fastening legs 88. A not-shown fastening bolt can be screwed to the nut 98 from obliquely downward and backward portion.

The right and left nuts 98 are positioned above the right and left first rear fastening holes 95 if the front upper and lower step-like portions 46 and 48 and the rear upper and lower step-like portions 47 and 49 are engaged in the lower engagement position. The right and left nuts 98 are positioned above the right and left second rear fastening holes 96 if the front upper and lower step-like portions 46 and 48 and the rear upper and lower step-like portions 47 and 49 are engaged in the intermediate engagement position. The right and left nuts 98 are positioned above the right and left third rear fastening holes 97 if the front upper and lower step-like portions 46 and 48 and the rear upper and lower step-like portions 47 and 49 are engaged in the upper engagement position. The fastening bolts inserted to any adjacent fastening holes are screwed into the right and left nuts 98, by which the rear portion of the main seat 31 is fixed to the rear portion of the seat lower extended portion 45 in such a state that the front upper and lower step-like portions 46 and 48 and the engagement position between the rear upper and lower step-like portions 47 and 49 are engaged in any of the engagement positions. On the other hand, the fastening bolts are screwed/unscrewed to thereby adjust the fixing position of the rear portion of the main seat 31 relative to the pillion 32 at three levels.

The pillion 32 can be mounted/dismounted to/from the body together with the main seat 31 as an integral double-seated seat by unlocking the locking mechanism with a key operation, for example.
Then, the seat 31 and the pillion 32 are dismounted from the body. In this state, the fastening bolts are screwed/unscrewed to change the engagement positions between the front upper and lower step-like portions 46 and 48 and between the rear upper and lower step-like portions 47 and 49 to thereby change the mounting position (mounting height) of the main seat 31 relative to the pillion 32. After that, the seat 31 and the pillion 32 are mounted to the body to adjust the seat height of the main seat 31 relative to the body.

As described above, the seat structure of the embodiment is applied to the motorcycle 1 that can adjust the height of the main seat 31 for a rider. The rear bottom plate 41 of the rear pillion 32 for a pillion passenger extends to the front portion of the body, and the height adjusting mechanism 50 of the main seat 31 is provided on the seat lower extended portion 45 of the rear bottom plate 41.

With this structure, it is unnecessary to provide the body with an adjusting mechanism or the like, and the structure of the seat and its surroundings is simplified, thereby making it possible to reduce the number of parts, the weight, and costs, and ease limitations on processing of the body frame 5 or design to improve the degree of freedom in design.

Further, in this seat structure, the rear bottom plate 41 of the pillion 32 and the front bottom plate 43 of the main seat 31 are provided with the front upper and lower step-like portions 46 and 48 that engage with each other and the rear upper and lower step-like portions 47 and 49 that engage with each other. The step-like portions 46 to 49 constitute the height adjusting mechanism 50 of the main seat 31, whereby the number of parts, the weight, and costs can be more reduced than the case of separately providing the height adjusting mechanism 50. In particular, the front and rear resin-made bottom plates 41 and the step-like portions 46 to 49 are integrally formed, whereby the formation can be facilitated and the degree of freedom in shape can be improved. Further, the front base 59 and the middle base 61 are provided on both of the front and rear lower step-like portions 46 and 47 to thereby bear a load of a rider in a limited area.

Further, in this seat structure, the step-like portions 46 to 49 ascends backward, and the rear surface 33 and the front surface 34 as the mating surface between the main seat 31 and the pillion 32 slope up toward the rear of the body. Hence, even when the height of the main seat 31 is adjusted, the main seat 31 which is moved along the step-like portions 46 to 49 ascending backward, moves along the mating surface (rear surface 33 and the front surface 34) that slopes up toward the rear of the body, whereby a clearance can be removed between the main seat 31 and the pillion 32.

Incidentally, the present invention is not limited to the above embodiment, and is applicable to, for example, such a structure that the pillion 32 is fixed to the body with a bolt or the like or to such a structure that the height of the main seat 31 can be adjusted at two levels or four or more levels. Further, the present invention is applicable to such a structure that step-like portions are formed in a bottom plate of only one of the main seat 31 and the pillion 32 or to such a structure that step-like portions are separately provided. Here, the bottom plates may be made of steel.
The structure of the embodiment is illustrated for explanatory purpose, and can be variously modified within the scope of the present invention as described in the claims.
- 1...: Motorcycle
- 31...: Main seat (rider's seat)
- 32...: Pillion (rear pillion passenger's seat)
- 33...: Rear surface (mating surface)
- 34...: Front surface (mating surface)
- 41...: Rear bottom plate (bottom plate)
- 43...: Front bottom plate (bottom plate)
- 45...: Seat lower extended portion (extended portion)
- 46, 47, 48, 49...: Step-like portion
- 50...: Height adjusting mechanism

## Claims

1. A motorcycle having a seat structure capable of adjusting a height of a rider's seat (31), wherein a bottom plate (41) of a rear pillion (32) extends toward the front of the body of the motorcycle, and a mechanism (50) of adjusting the height of the rider's seat (31) is made up of a lower extended portion (45) of the bottom plate (41) of the rear pillion (42) and a front bottom plate (43) of the rider's seat (31),
**characterized in that,**
the lower extended portion (45) of the bottom plate (41) of the rear pillion (42) and the front bottom plate (43) of the rider's seat (31) having step-like portions (46-49) which engage each other.

2. The motorcycle having a seat structure according to claim 1,
**characterized in that,**
the step-like portions (46-49) ascend towards the rear of the body of the motorcycle, and a mating surface between the rider's seat (31) and the rear pillion (42) slopes up toward the rear of the body of the motorcycle.

## Patentansprüche

1. Motorrad mit einer Sitzkonstruktion, mit der eine Höhe eines Fahrersitzes (31) eingestellt werden kann, worin sich eine Bodenplatte (41) eines hinteren Sattelkissens (32) in Richtung der Vorderseite des Motorradkörpers erstreckt und ein Mechanismus (50) zur Einstellung der Höhe des Fahrersitzes (31) aus einem unteren verlängerten Teil (45) der Bodenplatte (41) des hinteren Sattelkissens (42) und einer vorderen Bodenplatte (43) des Fahrersitzes (31) gebildet ist,
**dadurch gekennzeichnet, dass**
der untere verlängerte Teil (45) der Bodenplatte (41) des hinteren Sattelkissens (42) und die vordere Bodenplatte (43) des Fahrersitzes (31) stufenartige Teile (46-49) aufweisen, die miteinander in Eingriff stehen.

2. Motorrad mit einer Sitzkonstruktion gemäß Anspruch 1,
**dadurch gekennzeichnet, dass**
die stufenartigen Teile (46-49) in Richtung des Hecks des Motorradkörpers ansteigen und eine Passfläche zwischen dem Fahrersitz (31) und dem hinteren Sattelkissen (42) in Richtung des Hecks des Motorradkörpers schräg ansteigt.

## Revendications

1. Motocycle comprenant une structure de selle capable de régler une hauteur de la selle d'un conducteur (31), dans laquelle une plaque d'embase (41) d'une selle arrière (32) s'étend vers l'avant du corps du motocycle, et un mécanisme (50) de réglage de la hauteur de la selle du conducteur (31) se compose d'une partie en extension vers le bas (45) de la plaque d'embase (41) de la selle arrière (42) et d'une plaque d'embase avant (43) de la selle du conducteur (31),
**caractérisé en ce que :**
la partie en extension vers le bas (45) de la plaque d'embase (41) de la selle arrière (42) et la plaque d'embase avant (43) de la selle du conducteur (31) comportent des parties sous forme d'étagement (46 - 49) qui s'engagent les unes avec les autres.

2. Motocycle comprenant une structure de selle selon la revendication 1, **caractérisé en ce que** les parties sous forme d'étagement (46 - 49) sont en élévation vers l'arrière du corps du motocycle et une surface d'accouplement entre la selle du conducteur (31) et la selle arrière (42) est inclinée vers le haut et vers l'arrière du corps du motocycle.
